(19)

**Europäisches Patentamt**
**European Patent Office**
**Office européen des brevets**

(11) **EP 4 237 695 B1**

(12) **EUROPÄISCHE PATENTSCHRIFT**

(45) Veröffentlichungstag und Bekanntmachung des Hinweises auf die Patenterteilung:
**25.09.2024 Patentblatt 2024/39**

(21) Anmeldenummer: **21802674.8**

(22) Anmeldetag: **29.10.2021**

(51) Internationale Patentklassifikation (IPC):
**F16B 25/00** (2006.01)     **F16B 33/00** (2006.01)

(52) Gemeinsame Patentklassifikation (CPC):
**F16B 25/0021; F16B 33/004**

(86) Internationale Anmeldenummer:
**PCT/EP2021/080218**

(87) Internationale Veröffentlichungsnummer:
**WO 2022/090519 (05.05.2022 Gazette 2022/18)**

(54) **SCHRAUBE MIT UNTERKOPFBESCHICHTUNG**

SCREW HAVING AN UNDER-HEAD COATING

VIS À REVÊTEMENT SOUS LA TÊTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2020 DE 102020128662**

(43) Veröffentlichungstag der Anmeldung:
**06.09.2023 Patentblatt 2023/36**

(73) Patentinhaber: **omniTECHNIK Mikroverkapselungs GmbH 80993 München (DE)**

(72) Erfinder:
• **WECKERLE, Anselm**
  **80993 München (DE)**
• **LÜDTKE, Karin**
  **80993 München (DE)**
• **LANG, Markus**
  **80993 München (DE)**
• **THAU, Sebastian**
  **80993 München (DE)**
• **KUHN-WEISS, Alexander**
  **80993 München (DE)**
• **BERISHA, Agron**
  **80993 München (DE)**

(74) Vertreter: **SSM Sandmair Patentanwälte Rechtsanwalt Partnerschaft mbB Joseph-Wild-Straße 20 81829 München (DE)**

(56) Entgegenhaltungen:
**DE-A1- 102010 044 887     DE-A1- 102012 210 791**
**DE-T2- 69 114 017        US-A- 5 304 023**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Schraube mit einem Schraubenkopf und einem von einer Unterseite des Schraubenkopfs ragenden Schraubenschaft, der ein Gewinde zum Einschrauben der Schrauben in einen Körper aufweist.

Aus dem Stand der Technik sind Metallbauschrauben bekannt, bei denen an der Unterseite des Schraubenkopfs eine Unterlegscheibe angeordnet ist, die auf ihrer Unterseite eine Beschichtung aufweist. Die Beschichtung dient zur Abdichtung der Umgebung des Schraubenkopfs in Bezug auf eine Bohrung, in der die Schraube eingeschraubt ist, wobei die Unterseite der Unterlegscheibe mit ihrer Dichtung dichtend an einer Oberfläche eines Körpers des Schraubverbunds anliegt.

Ferner ist es bekannt, die Gewindegänge metrischer oder zölliger Außengewinde zur Herstellung einer Schraubensicherung und/oder Schraubendichtung mit dem Innengewinde, in die die Schraube eingeschraubt wird, mit einer Beschichtung zu versehen.

Insbesondere im statischen Metall- und Gerüstbau und dem Gebiet des Hoch- und Tiefbaus werden grundlegend andere Anforderungen an Belastbarkeit und Dichtigkeit gestellt, die mit dem grundlegend unterschiedenen Schraubverbund einhergehen. Hier werden Schrauben mit einem selbstformenden oder selbstfurchenden Gewinde benötigt, die eine zuverlässige Festigkeit bei statischer Belastung, Dichtigkeit gegen Flüssigkeiten, wie z. B. Wasser oder Öl, hinreichende UV-Beständigkeit, Einfachheit und Fehlerfreiheit der Verwendung und glatte Einschraubbarkeit bis zum planen Aufliegen des Schraubkopfes und Kontakt zwischen den Montagepartnern auch ohne Vorbereitung der zu verschraubenden Körper gewährleisten. Bekannt ist in diesem Bereich eine Schraube, die mit einem elastischen Dichtungsring versehen ist. Hierdurch kann zwar eine ausreichende Dichtigkeit und Festigkeit der Schraubverbindung erzielt werden, nachteilig ist jedoch, dass der Dichtungsring verlorengehen oder vergessen werden kann und durch UV-Strahlen zersetzt wird, wodurch es zu Setzbeträgen und somit dem Verlust der Klemmkraft kommen kann. Zudem kann die Dichtscheibe beim Einschrauben beschädigt oder zerstört werden, was zu Fehleranfälligkeit führt. Ferner ist das Herstellungsverfahren aufwendig und kostenintensiv.

Aus der DE 10 2012 210 791 A1 ist eine loch- und gewindeformende Schraube bekannt, auf deren Schraubenkopfunterseite ein Dichtmittel aufgetragen ist.

Der Erfindung liegt die Aufgabe zugrunde, eine Schraube mit einem selbstformenden oder selbstfurchenden Gewinde anzugeben, die zur Herstellung eines Schraubverbunds einfach verarbeitbar ist und das Eindringen von Medien, insbesondere Feuchtigkeit, in die einen Schraubenschaft der Schraube aufnehmende Bohrung eines Schraubverbunds zuverlässig verhindert sowie den Verlust der Vorspannung minimiert und dadurch die Dauerhaltbarkeit der Verbindung erhöht. Vorzugsweise liegt der Erfindung zudem die Aufgabe zugrunde, weitere der angesprochenen Nachteile bestehender Schraubkonzepte mit einem selbstformenden oder selbstfurchenden Gewinde zu vermeiden bzw. die Ergebnisse zu verbessern.

Weiterhin soll die erfindungsgemäße Schraube einfach herzustellen und kostensparend in Produktion, Transport und Lagerhaltung sein und, insbesondere im eingeschraubten Zustand, eine hohe ästhetische Funktion erfüllen können. Wünschenswert ist es außerdem, dass die erfindungsgemäße Schraube Querzugkräfte gut aufnehmen kann, beispielsweise besser als Schrauben mit Dichtringen, und sich nicht selbständig löst, unanfällig für Kontaktkorrosion ist, über einen langen Zeitraum sicher abdichtet und den Setzbetrag und/oder Fehler in der Montage minimiert.

Eine oder mehrere der genannten Aufgaben werden mit der Schraube nach Anspruch 1 und dem Schraubverbund nach dem nebengeordneten Anspruch 11 gelöst. Vorteilhafte Weiterbildungen ergeben sich aus den abhängigen Ansprüchen, der Beschreibung und den Figuren.

Die erfindungsgemäße Schraube umfasst einen Schraubenkopf und einen von einer Unterseite des Schraubenkopfs ragenden Schraubenschaft mit einem selbstformenden oder selbstfurchenden Gewinde, wobei der Schraubenkopf an der Unterseite eine Auflagefläche und zwischen Auflagefläche und Schaft eine ringförmige, sich um den Schaft erstreckende Vertiefung aufweist, wobei an der Unterseite des Schraubenkopfs eine Beschichtung aus einem Dichtmittel angebracht ist. Das Dichtmittel ist elastisch. Alternativ oder zusätzlich bevorzugt enthält das Dichtmittel 40 bis 90, stärker bevorzugt 50 bis 85 oder 60 bis 80 Gew.-% Harzkomponente bestehend aus einem polymeren Harz oder aus einem Gemisch zweier oder mehrerer polymerer Harze.

Der Schraubverbund, umfasst eine erfindungsgemäße Schraube, einen ersten, beispielsweise flachen oder plattenförmigen, Körper und einen zweiten, beispielsweise flachen oder plattenförmigen Körper, wobei zumindest der zweite Körper ein durch Einschrauben der Schraube erzeugtes Innengewinde aufweist, wobei der erste Körper zwischen dem Schraubenkopf und dem zweiten Körper eingefasst, insbesondere eingeklemmt ist, sich das Gewinde der Schraube im Eingriff mit dem Innengewinde des zweiten Körpers und sich das Kunststoffmaterial zwischen der Auflagefläche und dem ersten Körper befindet.

Die Erfindung geht von einer Schraube, insbesondere einer Metallbauschraube aus. Die Schraube umfasst einen Schraubenkopf und einen von der Unterseite des Schraubenkopfs ragenden Schraubenschaft mit einem selbstformenden oder selbstschneidenden Gewinde.

Unter einem selbstformenden oder selbstfurchenden Gewinde (Außengewinde) werden Gewinde verstanden, welche die Innengewindegänge während des Einschraubens der Schraube spanlos oder im We-

Die Schraube kann beispielsweise als selbstschneidende Schraube ausgebildet sein. Unter einer selbstschneidenden Schraube wird eine Schraube verstanden, die eine Kernlochbohrung für den Schraubenschaft während des Einschraubens der Schraube, insbesondere spanabhebend, erzeugt. Ein Vorbohren ist also nicht zwingend notwendig. Das Innengewinde kann durch das selbstformende oder selbstfurchende Außengewinde während des Einschraubens der Schraube in der Umfangswand der Kernlochbohrung erzeugt werden.

Der Schraubenschaft kann beispielsweise zylindrisch sein oder einen zylindrischen Abschnitt aufweisen. Das Gewinde kann an dem zylindrischen Abschnitt gebildet sein. Alternativ kann sich der Schraubenschaft vom Schraubenkopf oder kurz vor dem Schraubenkopf bis zum freien Ende des Schraubenschafts verjüngen, insbesondere konisch ausgebildet sein. Beispielsweise kann sich das Gewinde am Schraubenschaft, insbesondere an dem konischen oder zylindrischen Schraubenschaft oder Abschnitt des Schraubenschafts, bis zum Schraubenkopf oder bis kurz vor dem Schraubenkopf erstrecken.

Der Schraubenkopf weist an seiner Unterseite, das heißt an der Seite, an der der Schraubenschaft vom Schraubenkopf ragt, eine Auflagefläche für die Auflage oder den Kontakt des Schraubenkopfs auf dem Körper, insbesondere des Schraubverbunds, in den die Schraube eingeschraubt ist, auf. Zwischen der Auflagefläche und dem Schaft weist der Schraubenkopf mindestens eine ringförmige oder spiralförmige, sich um den Schaft erstreckende Vertiefung, insbesondere eine Rille oder eine Ringnut, auf. Der Grund der Vertiefung ist bezüglich der Auflagefläche in den Schraubenkopf zurückgesetzt. Beispielsweise können mehrere, vorzugsweise zueinander konzentrische, ringförmige Vertiefungen vorgesehen sein.

An der Unterseite des Schraubenkopfs ist eine an der Unterseite haftende Beschichtung aus einem Dichtmittel angebracht.

Die Beschichtung ist vorzugsweise so ausgeführt, dass sie in dem angegebenen Temperaturbereich, insbesondere zumindest bei Raumtemperatur, trocken und/oder grifffest-trocken und insbesondere nicht klebrig und/oder nicht benetzend ist. Dadurch trägt sich die Beschichtung nicht ab und bleibt an dem Schraubenkopf haften, wenn sie durch einen Gegenstand oder einen Verwender berührt wird. Dies ermöglicht eine einfache Verarbeitung und Lagerung der Schraube, beispielsweise in Form von Schüttware. Im Gegensatz zu der Verarbeitung von Schrauben, bei denen ein flüssiges Dichtmittel unmittelbar vor dem Verarbeiten auf den Schraubenschaft aufgebracht wird, entfällt bei der erfindungsgemäßen Schraube dieser Arbeitsschritt. Das erfindungsgemäße Dichtmittel ist bevorzugt physikalisch trocknend und muss bevorzugt weder über Temperatur noch chemisch ausgehärtet werden.

In Weiterbildungen kann der Schraubenkopf einen umfangsseitig, insbesondere vom übrigen Schraubenkopf ragenden, umlaufenden Flansch aufweisen, wobei die Auflagefläche zumindest teilweise von der Unterseite des Flanschs, beispielsweise vollständig, vorzugsweise jedoch zumindest teilweise auch von der Unterseite des übrigen Schraubenkopfs gebildet ist.

Der Schraubenkopf kann idealerweise ein Schrauben-Mitnahmeprofil aufweisen, welches angepasst ist, mit einem Werkzeug drehmomentübertragend zusammenzuwirken. Solche Schrauben-Mitnahmeprofile sind an sich bekannt. Beispiele für ein solches Schrauben-Mitnahmeprofil sind z.B. ein Außensechskant, ein Innensechskant, ein Außenmehrkant, ein Innenmehrkant, sogenannte Torx®-Profile, Längsschlitz, Kreuzschlitz, usw.

Beispielsweise kann der Schraubenschaft bezüglich der Auflagefläche senkrecht oder im Wesentlichen senkrecht stehen. Das heißt, dass die Auflagefläche möglichst flächig an dem Körper, in den die Schraube eingeschraubt ist, anliegen kann. Die Auflagefläche, bezüglich der der Schraubenschaft oder dessen Längsachse beispielsweise senkrecht oder im Wesentlichen senkrecht steht, kann ringförmig oder kreisringflächenförmig sein. Sie kann konzentrisch zur Längsachse des Schraubenschafts angeordnet sein. Beispielsweise kann die Auflagefläche eine radiale Breite aufweisen, die größer oder gleich der radialen Breite der Vertiefung ist, wobei sich der Radius auf die Längsachse des Schraubenschafts bezieht. Die Auflagefläche kann in ihrer radialen Breite alternativ oder zusätzlich eben oder im Wesentlichen eben sein und senkrecht oder im Wesentlichen senkrecht zur Längsachse der Auflagefläche stehen. Mit anderen Worten kann die Flächennormale der, bevorzugt ebenen, Auflagefläche parallel oder im Wesentlichen parallel zu der Längsachse des Schraubenschafts sein.

Beispielsweise kann die Auflagefläche einen Wert A betragen, der mindestens 30% der um den in der Ebene der Auflagefläche liegenden Querschnitt Q des (Schrauben)-Schafts verminderten Gesamtfläche GF unter dem Schraubenkopf beträgt:

$$A \geq 0,3 \cdot (GF\text{-}Q) \qquad \text{Formel 1}$$

Bevorzugt kann der Wert A der Auflagefläche mindestens 40%, stärker bevorzugt mindestens 50%, noch stärker bevorzugt mindestens 60% oder mindestens 70% oder mindestens 80% bis hin zu höchstens 90% oder 95% der um den in der Ebene der Auflagefläche liegenden Querschnitt Q des Schraubenschafts verminderten Gesamtfläche GF unter dem Schraubenkopf betragen, wobei die Auflagefläche beispielsweise durch die ringförmige Vertiefung begrenzt ist.

Vorteilhaft kann es daher sein, bei einer Schraube mit einem Kopf-Außendurchmesser von 8 bis 12 mm eine Auflagebreite von mindestens 1,5 mm, bei einer Schraube mit einem Kopf-Außendurchmesser von 13 bis 20 mm eine Auflagebreite von mindestens 2,0 mm und bei einer Schraube mit einem Kopf-Außendurchmesser von größer als 20 mm eine Auflagebreite von mindestens 2,5 mm vorzusehen, wenn handelsübliche Schaftdurchmesser zugrundegelegt werden.

Beispielhaft genannt werden 6er-Schrauben mit einem Wert A von vorzugsweise 70-85%, insbesondere 75% bis 82% oder etwa 80%, 10er-Schrauben mit mindestens 50% bis 68%, insbesondere 55% bis 66% oder etwa 63% und 20er-Schrauben mit mindestens 30% bis 45%, insbesondere 35% bis 42% oder etwa 40% Auflagefläche der um den in der Ebene der Auflagefläche liegenden Querschnitt Q des Schraubenschafts verminderten Gesamtfläche GF unter dem Schraubenkopf.

Durch die erfindungsgemäße Auflagefläche wird bei Anzug der Schraube der Auflagedruck verteilt und somit die Oberfläche des verschraubten plattenförmigen Körpers unter anderem zur Erhaltung der Dichtigkeit geschont, im Gegensatz zu Schrauben, die einen scharfkantigen Rand oder eine konische Unterseite des Schraubenkopfs aufweisen. Hier wird sämtlicher Anpressdruck über den Rand in den plattenförmigen Körper gepresst.

Der Schraubenschaft kann beispielsweise einen Bohrabschnitt mit zumindest einer Schneide, vorzugsweise zwei umfangsseitig gegenüberliegenden Schneiden aufweisen. Zwischen der mindestens einen Schneide und dem Schraubenkopf ist das Gewinde des Schraubenschafts ausgebildet. Beispielsweise kann das freie Ende des Schraubenschafts eine Spitze mit einem Spitzenwinkel zwischen 90° und 170° bilden. Die mindestens eine Schneide kann im Bereich der Spitze gebildet sein. Der Schraubenschaft kann ferner je Schneide eine sich an die Schneide anschließende Nut aufweisen, welche wendelförmig oder gerade, d.h. parallel zur Längsachse des Schraubenschafts, ausgebildet sein kann und insbesondere zum Umfang des Schraubenschafts hin offen ist. Die mindestens eine Nut kann sich nur über einen Teil des Schraubenschafts erstrecken, wobei das Gewinde zwischen der Nut und dem Schraubenkopf ausgebildet ist. Die Nut dient einerseits dazu, die Spanfläche für die mindestens eine Schneide bereitzustellen und andererseits dazu, die durch den Bohrvorgang mit der mindestens einen Schneide erzeugten Späne aufzunehmen. Die Spitze des Schraubenschafts kann beispielsweise zumindest im Bereich der Schneiden gehärtet sein. Der übrige Schaft, insbesondere im Bereich des Gewindes kann nicht gehärtet sein bzw. eine geringere Härte als die Spitze oder die mindestens eine Schneide aufweisen. Der Bereich des Schafts, in dem sich die mindestens eine Schneide und/oder die zur Aufnahme der Späne vorgesehene Nut aufweist, kann beispielsweise ohne Gewinde ausgebildet sein.

Beispielsweise kann der Schaft einen sich zum freien, insbesondere als Spitze oder abgerundete Spitze ausgebildeten Ende des Schafts hin verjüngenden Abschnitt aufweisen, zwischen dem und dem Schraubenkopf das Gewinde zumindest teilweise gebildet ist, wobei der sich verjüngende Abschnitt ohne Gewinde oder mit einem Teil des Gewindes versehen ist.

Das Gewinde des Schafts kann sich beispielsweise über den sich verjüngenden Abstand bis hin zur Spitze erstrecken. Beim Einschrauben der Schraube in beispielsweise ein nicht vorgebohrtes Metallblech kann die Schraubenspitze mit dem Gewinde beim Einschrauben der Schraube in dem Material des Blechs festgreifen und die Schraube in das Blech hineinziehen.

Alternativ kann der sich verjüngende Abschnitt ohne Gewinde ausgebildet sein, insbesondere zum Fließlochformen ausgebildet sein. Beispielsweise kann der Schaft im Bereich der Spitze oder des sich verjüngenden Abschnitts im Querschnitt unrund oder in etwa polygonförmig oder oval, alternativ rund oder kreisrund ausgebildet sein. Die sich an den verjüngenden Bereich anschließende Spitze kann bevorzugt abgerundet sein.

Die Beschichtung kann zumindest im Bereich der Auflagefläche angeordnet sein und insbesondere dort anhaften. Optional kann die Beschichtung zusätzlich im Bereich der mindestens einen Vertiefung (Rille) und/oder im Bereich des Schafts angeordnet sein. Die Beschichtung kann in der mindestens einen ringförmigen Vertiefung angeordnet sein oder die ringförmige Vertiefung überspannen. Die Beschichtung kann einen Bereich, insbesondere Teilbereich am Schaft bedecken, bevorzugt einschließlich mindestens eines, besonders bevorzugt mindestens zweier oder dreier Gewindegänge. Bevorzugt kann eine Beschränkung auf höchstens acht oder höchstens sechs, bzw. höchstens vier oder auch drei Gewindegänge sein.

Beim Einschrauben der Schraube in den oder die Körper zur Bildung eines Schraubverbunds wird die Unterseite des Schraubenkopfs mit der daran angeordneten Beschichtung gegen den Körper gedrückt, wodurch der Bereich radial außerhalb der Beschichtung in Bezug zu dem Bereich radial innerhalb der Beschichtung bzw. dem Bereich des Schraubverbunds, in den der Schraubenschaft eingeschraubt ist, abgedichtet wird. Wenn die Beschichtung zusätzlich im Bereich der ringförmigen Vertiefung und/oder an dem Schraubenschaft angebracht ist, kann die Abdichtung noch verbessert oder verstärkt werden.

Die mindestens eine Vertiefung dient dazu, Material des Körpers, in den die Schraube eingeschraubt ist oder wird, aufzunehmen. Beispielsweise kann durch Einschrauben der Schraube in den Körper um die Gewindebohrung herum ein Grat oder mindestens ein Span entstehen, welcher eine möglichst satte Auflage der Auflagefläche an dem Körper hemmen und somit die Dichtwirkung beeinträchtigen kann. Die ringförmige Vertiefung kann zur Aufnahme dieses Grats oder mindestens eines Spans dienen, sofern dieser nicht bereits während des Schraubvorgangs weggeschleudert wird, wodurch der Auflagefläche erlaubt wird, mit der Beschichtung zuverlässig dichtend an dem Körper anzuliegen.

In Weiterbildungen kann die Schichtdicke der Beschichtung in uneingeschraubtem Zustand der Schraube zumindest an der Unterseite der Auflagefläche, insbesondere außerhalb des Bereichs der Vertiefung mindestens 0,1 mm, bevorzugt mindestens 0,2 mm, ganz besonders bevorzugt mindestens 0,4 mm betragen und insbesondere höchstens 0,9 mm, bevorzugt höchstens 0,8 mm, ganz besonders bevorzugt höchstens 0,7 mm betragen, beispielsweise 0,4 bis 0,6 mm. Im eingeschraubten Zustand kann die Schichtdicke bis hin zu 0 mm, wenn lediglich noch die Rauhtiefen aufgefüllt werden, gedrückt werden. Bevorzugt sind im verschraubten Zustand Schichtdicken im Bereich von 0,01 bis 0,4 mm, insbesondere 0,1 bis 0,2 mm. Es hat sich herausgestellt, dass diese Schichtdicken eine optimale Dichtwirkung bei gleichzeitiger Materialeinsparung für die Beschichtung ermöglichen.

Die Erfindung betrifft ferner einen Schraubverbund, der eine erfindungsgemäße Schraube und einen ersten Körper und einen zweiten Körper umfasst. Zumindest der zweite Körper kann ein durch Einschrauben der Schraube erzeugtes Innengewinde aufweisen, wobei der erste Körper zwischen dem Schraubenkopf, insbesondere der Unterseite des Schraubenkopfs und dem zweiten Körper eingefasst, insbesondere eingeklemmt ist. Optional kann auch der erste Körper ein Innengewinde aufweisen. Das Gewinde der Schraube befindet sich im Eingriff mit dem Innengewinde des zweiten Körpers und das Kunststoffmaterial bzw. die Beschichtung zwischen der Auflagefläche mit dem ersten Körper.

Der erste Körper kann beispielsweise flach oder plattenförmig, insbesondere als Blech oder Metallblech ausgebildet sein. Der erste Körper kann beispielsweise aus Metall (schließt Metalllegierungen ein), Holz oder Kunststoff oder einem Verbundmaterial, insbesondere daraus, gebildet sein. Bevorzugt ist die zum Schraubenkopf weisende Oberfläche glatt oder zumindest so beschaffen, dass die Beschichtung an der Unterseite des Schraubenkopfs den Kontaktspalt zwischen der Oberfläche und der Beschichtung abdichtet. Die Oberfläche kann beispielsweise von einer von oder an dem ersten Körper gebildeten Schicht aus Metall oder Kunststoff gebildet sein.

Der zweite Körper kann beispielsweise flach oder plattenförmig, insbesondere als Blech oder Metallblech ausgebildet sein. Der zweite Körper kann beispielsweise aus Metall (schließt Metalllegierungen ein), Holz oder Kunststoff oder einem Verbundmaterial, insbesondere daraus, gebildet sein.

Beispielsweise lassen sich mit der erfindungsgemäßen Schraube zwei Metallbleche (die dem ersten und zweiten Körper entsprechen) verbinden. In einem anderen Beispiel lässt sich ein Metallblech, welches dem ersten Körper entspricht, an einem zweiten Körper aus Holz oder Kunststoff befestigen. Die genannten Beispiele sind nur als solche zu verstehen und schließen andere Kombinationen von ersten und zweiten Körpern nicht aus.

Insbesondere kann bei der Herstellung des Schraubverbunds die Beschichtung verformt, insbesondere die Schichtdicke verringert werden. Beispielsweise kann das Material der Beschichtung fließen, insbesondere radial nach außen und/oder radial nach innen, das heißt zum Schaft hin, insbesondere in die ringförmige Vertiefung fließen. Beispielsweise kann die Beschichtung oder zumindest ein Teil davon durch das Anpressen des Schraubenknopfs an den ersten Körper elastisch und/oder plastisch verformt werden, um an der Außenkante des Schraubenknopfs einen teilweise oder vollständig um den Schraubenkopf umlaufenden Wulst zu bilden.

Durch die zwischen der Auflagefläche und dem ersten Körper verbleibende Beschichtung wird der Bereich radial außerhalb der Auflagefläche in Bezug zu dem Bereich radial innerhalb der Auflagefläche oder der Gewindebohrung zuverlässig abgedichtet. Des Weiteren kann das Material die Auflagefläche des Kopfes verlassen und Kontakt zwischen den Fügepartnern ermöglichen, dies ermöglicht hohe Dauerfestigkeit und durch Auffüllen der Rauhtiefen eine zuverlässige Abdichtung gegen umgebende Medien.

Durch den teilweise oder vollständig umlaufenden Wulst, der aus der radial nach außen verdrängten Beschichtung gebildet ist, findet eine noch bessere Abdichtung statt. Ferner schützt der Wulst den zwischen der Unterseite des Schraubenkopfs und dem ersten Körper verbliebenen Teil der Beschichtung beispielsweise vor beispielsweise von der Sonne stammender UV-Lichteinstrahlung, wodurch die Haltbarkeit der Abdichtung noch weiter verbessert und Setzbeträge verhindert oder verringert werden können.

In einer Ausführung kann der erste Körper ein Durchgangsloch, insbesondere ein durch Bohren oder durch Stanzen oder ähnliche Weise erzeugtes Loch aufweisen, dessen Durchmesser größer als der Außendurchmesser des Außengewindes des Schraubenschafts ist und durch das sich der Schraubenschaft erstreckt. In einer solchen Ausführung braucht die Schraube kein Gewinde im ersten Körper zu erzeugen.

In einer alternativen Ausführung kann der erste Körper ein durch Einschrauben der Schraube erzeugtes Innengewinde aufweisen, wobei sich das Gewinde der Schraube im Eingriff mit dem Innengewinde des ersten Körpers und insbesondere auch im Eingriff mit dem Innengewinde des zweiten Körpers befindet.

Das an der Unterseite des Schraubenkops angebrachte Dichtmittel ist elastisch. Insbesondere kann das Dichtmittel über den gesamten Bereich zwischen -10 °C und +100 °C, insbesondere zwischen -40 °C bis 150 °C elastisch sein.

Elastizität bezeichnet die Eigenschaft von Polymeren, nach einer Verformung reversibel wieder in den Ausgangszustand zurückzukehren. Der Ausgangszustand ist dabei entropisch günstiger (als "Knäuel" weniger geordnet) als der gestreckte Zustand, in dem Polymerketten parallel angeordnet sind. Gummielastizität tritt bei Polymeren im Allgemeinen bei Temperaturen im Bereich zwischen der Glasübergangstemperatur und der Zersetzungstemperatur (Elastomere) bzw. der Erweichungstemperatur (kristalline und teilkristalline Thermoplaste) auf. Die erfindungsgemäß verwendeten Dichtmittel sind demgegenüber neben elastischen auch zu plastischen Verformungen unter den Bedingungen des Einschraubens in der Lage.

Das Dichtmittel und insbesondere seine Harzkomponente weist Elastizität bevorzugt mindestens in dem Bereich, besonders bevorzugt über den gesamten Bereich von -10 °C bis +100 °C auf, stärker bevorzugt auch oberhalb von 130°C oder noch weiter bevorzugt bis hin zu 200 °C. Das Dichtmittel und insbesondere seine Harzkomponente weist Elastizität bevorzugt bis hinab zu -30 °C oder auch -40 °C auf. Es ist vorzugsweise bei Raumtemperatur und Normaldruck oder unter den Verarbeitungsbedingungen, beispielsweise zwischen -10 °C und +50°C, auch bis hin zu 100 °C oder 130 °C oder auch 200 °C grifffest trocken und nicht klebrig sowie nicht benetzend. Der Fachmann versteht unter "grifffest trocken" den Zustand von beschichteten Teilen, in dem keine wahrnehmbaren Materialmengen übertragen werden, wenn sie von Hand angefasst oder mittels eines absorbierenden Materials berührt werden.

Der Fachmann versteht unter der Eigenschaft "nicht klebrig", dass die Kohäsionskräfte des Dichtmittels stets höher sind als die Adhäsionskräfte zu angrenzenden Materialien wie beispielsweise Hand oder Handschuh. Auf diese Weise zieht das Dichtmittel keine Fäden, es ist angenehm zu bedienen, und insbesondere wird die Schichtdicke unter üblichen Arbeitsbedingungen nicht durch Griff, Lagerung und ähnliche Einflüsse verändert. Das Polymer weist bevorzugt bei Raumtemperatur (23°C) eine Festigkeit von 2 N/mm$^2$ bis 10 N/mm$^2$ auf.

Insbesondere kann das Dichtmittel erfindungsgemäß 40 bis 90 Gew.% Harzkomponente bestehend aus einem polymeren Harz oder aus einem Gemisch zweier oder mehrerer polymerer Harze enthalten, wobei im Falle eines Harzes dies vorzugsweise elastisch ist und im Falle mehrerer polymerer Harze diese vorzugsweise elastisch sind oder elastische(s) Harz(e) umfassen.

Das Dichtmittel ist ein nicht-reaktives Dichtmittel, bevorzugt besteht die Harzkomponente aus einem oder mehreren nicht-reaktiven polymeren Harzen.

Besonders bevorzugt kann die Harzkomponente des Dichtmittels daher nicht-reaktiv sein. Der Fachmann versteht unter einem nicht-reaktiven polymeren Harz ein Polymer, das chemisch nicht aushärtet, um seine Dicht- und/oder Haftfunktion zu erfüllen. Geeignete nicht-reaktive polymere Harze sind grundsätzlich beispielsweise Acrylate, Acrylat-Copolymere, Polyolefine, Silikone, Plastisole, Polyamide, Polyvinylchlorid (PVC), Acrylnitril/chloriertes Polyethylen/Styrol, Butadien-Kautschuk, Chloropren-Kautschuk, Ethylen-Propylen-Copolymer, Ethylen-Propylen-Dien-(Monomer) Kautschuk EPDM, Ethylenvinylacetat, Fluorkautschuk, Isopren-Kautschuk, Naturkautschuk, Polyether-Block-Amid, Polyhydroxyalkanoate, Polyhydroxybutyrat, Polyisobutylen, Polyurethan, Polyvinylbutyral, Styrol-Butadien-Kautschuk, Styrol-Butadien-Styrol, Vinylchlorid/Ethylen. Am stärksten bevorzugt sind Acrylate und Acrylat-Copolymere. Beispiele für besonders geeignete Acrylat-Copolymere sind: Acrylnitril/Butadien/Acrylat, Acrylnitril/Methacrylat, Ethylen-Ethylacrylat-Copolymer, Vinylchlorid/Ethylen/Methacrylat. Demgegenüber ist beispielsweise Polymethyl-methacrylat wegen fehlender Elastizität als polymeres Harz der Harzkomponente nicht bevorzugt.

Bevorzugt kann die Harzkomponente des Dichtmittels ein oder mehrere Acrylatpolymere und/oder ein oder mehrere Acrylatcopolymere umfassen, insbesondere kann die die Harzkomponente bevorzugt aus Acrylatpolymeren und Acrylatcopolymeren bestehen.

Silikone sind beispielsweise wegen einer relativ geringen Reißdehnung nicht bevorzugt. Polyolefine sind beispielsweise wegen geringer Temperaturbeständigkeit, insbesondere was ihre Formstabilität und/oder chemische Beständigkeit angeht, nicht bevorzugt. Plastisole (ungehärtete und gehärtete) sind unter anderem wegen der enthaltenen Weichmacher und der durch Leaching verminderten Dauerhaftigkeit und Umweltverträglichkeit nicht bevorzugt. Polyamide, PVC und andere polymerisierte Dichtstoffe sind wegen der geringen Elastizität und Reißdehnung ebenfalls nicht bevorzugt. Polyurethane sind nicht bevorzugt, da ihnen die Stabilität fehlt und sie hohe Setzbeträge aufweisen.

In ihrer allgemeinsten Fassung und nicht bevorzugt kann das Dichtmittel gemäß der Erfindung jedoch auch ein grifffestes und trockenes aushärtendes Polymer sein, bspw. ein heißhärtendes Polyurethan.

Idealerweise kann das Dichtmittel aus einer einzigen Komponente bestehen, die einfach aufgetragen werden kann und nicht härtend, insbesondere nicht heiß härtend ist. Dabei kann das Dichtmittel bevorzugt als Dispersion, insbesondere wässrige Dispersion, aufgetragen werden und anschließend bis zur Gewichtskonstanz getrocknet werden.

Die Dichtmittel-Dispersion zur Auftragung kann bevorzugt Additive enthalten, beispielsweise anorganische und/oder organische Farbstoffe bzw. Pigmente (Partikelgröße typischerweise definiert durch Median von 1,5 bis 6, bevorzugt 2 bis 4 μm). Netzmittel, Aufheller, Lösungsvermittler, Füllstoffe (Partikelgröße typischerweise definiert durch Median von 1,5 bis 6, bevorzugt 2 bis 4 μm), Entschäumer, ionische und/oder nichtionische Verdickungsmittel, Korrosionsschutzmittel, Antioxidatien, Reibungsverminderer, Gleitmittel, und/oder Rheologieadditive.

In einer bevorzugten Ausführungsform kann das Dichtmittel als wässrige Dispersion aufgetragen werden, wobei die wässrige Dispersion enthält:

30 bis 80 Gew.-%, bevorzugt, 40 bis 70 Gew.-%, insbesondere 50 bis 60 Gew.-% wässrige Harzdispersion;

15 bis 55 Gew.-%, bevorzugt 20 bis 50, insbesondere 30 bis 40 Gew.-% Additive 5 bis 30 Gew.-%, bevorzugt 7 bis 20, insbesondere 10 bis 15 Gew.-% Wasser;

Beispielsweise kann die aufzutragende Dispersion die folgende Zusammensetzung aufweisen:

15-20 Gew.-% wässrige High-Solids-Dispersion (60-65 % Solids) eines hochelastischen Acrylatcopolymers (Glasübergangstemperatur unter -10 °C)
35-42 Gew.-% wässrige High-Solids-Dispersion (60-65 % Solids) eines hochelastischen Acrylatpolymers (Glasübergangstemperatur zwischen 5 und 15 °C)
5-15 Gew.-% wässrige Dispersion eines Gleitmittels (z. B. Wachses; Partikelgröße mind. 98 % < 8,5 $\mu$m, Median zwischen 2 und 4 $\mu$m; Tropfpunkt des Wachses 100 bis 130 °C, 40-50 % Solids)
2-8 Gew.-% wässrige Paste anorganischer Pigmente (47-55 % Solids)
10-15 Gew.-% Füllstoffe (z. B. anorganische Carbonate)
5-10 Gew.-% weitere Additive (z. B. Netzmittel, Aufheller, Lösungsvermittler, Entschäumer, Verdickungsmittel)

Rest Wasser.

Im Zustand der Dispersion ist das Dichtmittel leicht zu verarbeiten und viskos, beispielsweise nach DIN 53211 :1987-06 und DIN 2431 :2020-02 bei Raumtemperatur (22°C) kann die dynamische Viskosität (gemessen mit einem Anton Paar Rheometer MCR 92) bei 1 Upm im Bereich 12000 bis 1300 mPa·s, insbesondere 8000 bis 1800 mPa·s oder auch 6000 bis 2300 mPa·s liegen, bei 100 UPM im Bereich 900 bis 100 mPa·s, bevorzugt 800 bis 125 mPa·s, insbesondere 650 bis 150 mPa·s oder 500 bis 175 mPa·s und bei 1000 UPM im Bereich 500 bis 25 mPa·s, bevorzugt 450 bis 35 mPa·s, insbesondere 350 bis 50 mPa·s oder 250 bis 65 mPa·s, je besonders bevorzugt:

| Upm | Viskosität in mPas |
|-----|--------------------|
| 1 | 1800 |
| 100 | 150 |
| 1000 | 50 |

Oder:

| Upm | Viskosität in mPas |
|-----|--------------------|
| 1 | 8000 |
| 100 | 650 |

(fortgesetzt)

| Upm | Viskosität in mPas |
|-----|--------------------|
| 1000 | 350 |

Nach der Trocknung ist das Dichtmittel bevorzugt grifffest-trocken, nicht mehr in Wasser löslich bzw. dispergierbar und bevorzugt amorph. Neben seinen elastischen Eigenschaften besitzt das Dichtmittel erfindungsgemäß noch die Eigenschaft der "Super-Zähigkeit". Ein superzähes Material ist unter Druck nicht nur elastisch, sondern auch plastisch verformbar. Es "fließt" gleichsam in zur Verfügung stehende Rillen, Ritzen, Vertiefungen Aussparungen, während nicht superzähe Materialien wie beispielsweise ausgehärtete Duroplaste einschließlich reaktiver Dicht- oder Klebstoffe, auf Druck zerbröseln. Als "super-zäh" werden beispielsweise Materialien verstanden, die in einem Hochgeschwindigkeits-Zugversuch unter 200 mm/min nach ISO 18872 :2007-02 und EN ISO 527-1 :2019-11 eine Bruchdehnung von 150 bis 250 % zeigen. Demgemäß ist bevorzugt, dass das erfindungsgemäße Dichtmittel eine Bruchdehnung von insbesondere 170 bis 230 % oder idealerweise von 180 bis 200 % zeigt. Alternativ kann ein Dichtstoff als "superzäh" bezeichnet werden, wenn im Versuch zur Ermittlung der Losbrechdrehmomente und Weiterdrehmomente (in Anlehnung an DIN 267-27) ein Weiterdrehmoment gemessen wird, das bei 100° Drehung noch mindestens 80% des Losbrechmoments, vorzugsweise mindestens 90%, ganz besonders mindestens 100 % des Losbrechmoments aufweist und das Material dabei seine Struktur nicht verändert bzw. zerstört wird, so dass eine Wiederholung des Versuches mit ähnlichen Werten möglich ist und es auch nach einer typischen Aushärtezeit, z.B. 24h, zu keinem Losbrechmoment-Peak kommt.

Das Dichtmittel kann beispielsweise eine Shore-Härte A von 20 Shore bis 100 Shore, insbesondere von 20 Shore bis 90 Shore oder 30 bis 50, insbesondere 40 $\pm$5 aufweisen, gemessen nach DIN EN ISO 868 :2003-10.

Das aufgetragene und grifffest-trockene Dichtmittel weist bevorzugt eine sehr gute Adhäsion auf. Im Adhäsionstest auf einer planen Stahloberfläche nach DIN EN ISO 2409 :2013-06 wird bevorzugt mindestens eine gute Adhäsion (Bewertung 1 von 0-4) erzielt mit Beschädigungen entlang der Schnittkanten von höchstens 5 %.

Durch das voraufgetragene Dichtmittel der Erfindung entfällt für die gattungsgemäßen Schrauben, beispielsweise Bauschrauben erstmals das Erfordernis von zusätzlichen Dichtvorrichtungen wie "O-Ringen" oder Dichtscheiben, beispielsweise die üblichen EPDM-Dichtscheiben, und das damit einhergehende Fehlerrisiko. Die erfindungsgemäß hergestellte Abdichtung ist langlebig durch Temperatur-, Wasser- und Chemikalienbeständigkeit beispielsweise gegenüber Öl, Alkohol, Benzin, organischen Lösemitteln, sauren oder basischen Umwelteinflüssen, Sie ist formstabil, insbesondere bei Verwendung nicht-reaktiver und/oder nichthärtender Dichtmittel.

Die Temperaturbeständigkeit der Dichtwirkung des Dichtmittels kann beispielsweise im Verfahren nach DIN 267-27 :2009-09 festgestellt werden, das eine Alterung bei 20°C, 100°C, 150°C, 170°C und 200°C über 1000 Stunden und Raumtemperatur als Testtemperatur vorsieht. Bevorzugt wird mit dem erfindungsgemäß einzusetzenden Dichtmittel keine Undichtigkeit festgestellt.

Die chemische Beständigkeit kann beispielsweise im Verfahren nach DIN 267-27 :2009-09 festgestellt werden. bevorzugt wird mit dem erfindungsgemäß eingesetzten Dichtmittel in verschiedenen flüssigen Medien (beispielsweise Glycol 100 %, Wasser/Glycol-Gemisch 1:1) nach 7 Tagen Einwirkzeit im Test unter 6 bar in 10 Minuten keine Undichtigkeit festgestellt.

Adhäsions- und Kohäsionswerte können durch die Bestimmung von Überschraubmomenten nach DIN 267-28 :2009-09 ausgedrückt werden. Bevorzugt liegt das Einschraubdrehmoment $M_{Ein}$ im Bereich 2 bis 10 Nm, besonders bevorzugt 3 Nm bis 7 Nm (bezogen auf Schrauben ISO 4017 M10x35-8.8-vergütungsschwarz, Muttern ISO 4032 M10-10-vergütungsschwarz, geprüft nach DIN 267-28 :2009-09).

UV-Beständigkeit des Dichtmittels kann nach DIN EN ISO 4892-11 :2016-10 unter künstlichem UV-Licht (Hönle UV-Lampe UV-250 (G-Spektrum) mit einer Intensität von 30 mW/cm$^2$) bestimmt werden. Bevorzugt tritt mit den erfindungsgemäß eingesetzten Dichtmitteln nach 2 Wochen Bestrahlung keine messbare Veränderung der Shore-Härte, Elastizität oder Bruchdehnung bzw. Reißfestigkeit auf.

Zusätzlich zur Beschichtung mit einem Dichtmittel kann die erfindungsgemäße Schraube auch mit einem reaktiven Klebstoff, beispielsweise einem grifffesttrockenen Zweikomponentenkleber beschichtet sein. Ohne eine zusätzliche Klebebeschichtung kann die erfindungsgemäße Schraube bevorzugt zur mehrfachen Benutzung geeignet sein.

Die Erfindung wurde anhand mehrerer Ausführungen und Beispielen beschrieben. Im Folgenden wird eine Ausführungsform anhand von Figuren beschrieben. Die dabei offenbarten Merkmale bilden die Gegenstände der Ansprüche einzeln und in jeglicher Merkmalskombination vorteilhaft weiter. Es zeigen:

Figur 1    eine Seitenansicht einer erfindungsgemäßen Schraube; und

Figur 2    einen Schraubverbund mit einem ersten und zweiten plattenförmigen Körper und der Schraube nach Figur 1.

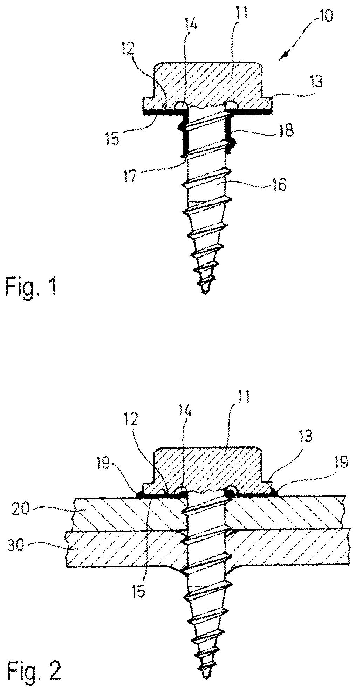

Die Schraube 10 aus den Figuren 1 und 2 weist einen Schraubenkopf 11 und einen von der Unterseite des Schraubenkopfs 11 ragenden Schraubenschaft 16 auf. Der Schraubenkopf 11 weist an seiner Unterseite eine Auflagefläche 12 für die Abstützung an einem Körper 20 eines Schraubverbunds (Figur 2) auf. Der Schraubenkopf 11 weist einen über den Außenumfang des Schraubenkopfs umlaufenden Flansch 13 auf, der in Bezug auf den restlichen Schraubenkopf 11 radial nach außen ragt. Die Auflagefläche 12 wird von der Unterseite des Schraubenkopfs 11 gebildet, wobei ein Teil von dem Flansch 13 gebildet wird. Der Schraubenkopf 11 weist ein Schraubenmitnahmeprofil auf, welches angepasst ist, mit einem Werkzeug drehmomentübertragend zusammenzuwirken. Der insbesondere senkrecht oder normal von der Auflagefläche 12 ragende Schraubenschaft 16 weist ein Außengewinde, insbesondere nicht metrisches Außengewinde auf, mit der die Schraube 10 in mindestens einen Körper 20, 30, einschraubbar ist.

Der Schraubenschaft 16 weist einen im Wesentlichen zylindrischen Abschnitt auf, wobei zumindest der zylindrische Abschnitt das Außengewinde 17 aufweist. In dem gezeigten Beispiel weist der Schraubenschaft 16 auf der vom zylindrischen Abschnitt ragenden Seite des Schraubenschafts einen sich verjüngenden, insbesondere konisch verjüngenden, Abschnitt auf, der am freien Ende des Schraubenschafts 16 eine Spitze bildet. Das Gewinde 17 erstreckt sich in dem gezeigten Beispiel nicht nur über den zylindrischen Teil des Schraubenschafts 16, sondern auch über den sich verjüngenden Teil des Schraubenschafts 16 bis oder nahezu bis zur Spitze.

Das Gewinde 17 ist als selbstfurchendes oder selbstformendes Gewinde ausgebildet. Die Schraube 10 kann in einen Körper 20, 30 eingeschraubt werden, ohne dass es hierzu notwendigerweise eines Kernlochs oder überhaupt einer Bohrung bedarf.

Die Schraube 10 ist vorzugsweise zum Einschrauben in dünne, plattenförmige Körper, beispielsweise Bleche, vorgesehen bzw. ausgebildet. Mit Hilfe der Schraube 10 können zwei Bleche oder Körper 20, 30 zur Herstellung eines Schraubverbunds (Figur 2) verbunden werden.

Die, insbesondere ebene, Auflagefläche 12 läuft ringförmig oder kreisringflächenförmig um den Schraubenschaft 16 herum. Zwischen der Auflagefläche 12 und dem Schraubenschaft 16 ist eine ringförmige, in dem gezeigten Beispiel als Rille oder Nut ausgebildete Vertiefung 14 angeordnet. Die Vertiefung 14 begrenzt die, insbesondere als Kreisringfläche ausgebildete, Auflagefläche 12 zum Schraubenschaft 16 hin, d. h. radial nach innen. Der Außenumfang des Schraubenkopfes 12 oder des Flansches 13 begrenzt die Auflagefläche radial nach außen. Der Grund oder Boden der Vertiefung 14 ist bezüglich der Auflagefläche 12 in den Schraubenkopf 11 zurückgesetzt. Die Flanken der Vertiefung 14 gehen bevorzugt abgerundet in den Boden oder Grund der Vertiefung 14 über. Somit werden vorteilhaft Kerbwirkungen innerhalb der Vertiefung 14 vermieden.

Auf der Unterseite des Schraubenkopfs 11 ist eine Beschichtung angeordnet, welche zumindest die Auflagefläche 12 teilweise oder vollständig überdeckt. In dem gezeigten Beispiel überspannt die Beschichtung 15 zusätzlich die Vertiefung 14 und erstreckt sich zum Teil noch über den Schraubenschaft 16, insbesondere den zylindrischen Teil des Schraubenschafts 16, wie mit dem Bezugszeichen 18 angedeutet ist. In dem Bereich 18 erstreckt sich die Beschichtung 15 über bevorzugt mindestens einen, zwei oder drei oder bis hin zu allen Gewindegängen. In manchen Ausführungsformen erstreckt sich die Beschichtung vorzugsweise jedoch nicht über alle Gewindegänge, wie zum Beispiel nur einen, zwei oder drei Gewindegänge. Im gezeigten Ausführungsbeispiel erstreckt sich der Bereich 18 über zwei Gewindegänge. Der sich verjüngende Teil des Schraubenschafts 16 ist vorzugsweise frei von der Beschichtung 15.

Die Beschichtung 15 ist als vorzugsweise elastisches Dichtmittel ausgeführt. Insbesondere ist das Dichtmittel zwischen -10 °C und +100 °C, vorzugsweise über diesen gesamten Bereich, elastisch. Die Beschichtung ist bevorzugt so ausgeführt, dass sie grifffest ist, das heißt bei Berührung nicht klebrig ist. Dies ermöglicht die Lagerung und Handhabung der Schraube als Schüttware, wobei klarstellend hinzugefügt wird, dass die Schraube natürlich nicht zwangsläufig als Schüttware bereitgestellt werden muss, sondern auch anders, beispielsweise in sogenannte Schraubenmagazinen bereitgestellt werden kann.

Der in der Figur 2 gezeigte Schraubverbund umfasst die Schraube 10 nach Figur 1 oder eine andere hierin genannte Variante einer erfindungsgemäßen Schraube, einen ersten plattenförmigen Körper 20 und einen zweiten plattenförmigen Körper 30. In dem Beispiel aus Figur 2 weisen der erste Körper 20 und der zweite Körper 30 ein durch Einschrauben der Schraube 10 erzeugtes Innengewinde auf, wobei der erste Körper 20 zwischen dem Schraubenkopf 11 und dem zweiten Körper 30 eingefasst oder eingeklemmt ist. Das Außengewinde 17 der Schraube 10 befindet sich bei dem fertiggestellten Schraubverbund im Eingriff mit dem Innengewinde des ersten Körpers 20 und des zweiten Körpers 30. Die Unterseite des Schraubenkopfs 11 stützt sich mit der mit der Beschichtung 15 versehenen Auflagefläche 12 an der Oberseite, das heißt der zum Schraubenkopf 11 weisenden Seite oder Fläche des ersten Körpers 20 ab. Durch das Anziehen der Schraube und der Erhöhung des Anpressdrucks oder der Anpresskraft des Schraubenkopfs 11 auf den ersten Körper 20 wird die Beschichtung 15 aus dem Spalt zwischen der Auflagefläche 12 und der Oberseite des ersten Körpers 20 zumindest teilweise verdrängt, insbesondere radial nach außen, das heißt auf die Außenseite des Schraubenkopfs 11 und/oder nach innen, das heißt zum Schaft 16 und/oder zur Vertiefung 14 hin. Die zwischen der Auflagefläche 12 und dem ersten Körper 20 verbleibende Beschichtung 15 dichtet den Bereich außerhalb des Schraubenkopfs 11 in Bezug auf die Gewindebohrung(en) in der sich der Schraubenschaft 16 befindet, insbesondere gas- und/oder flüssigkeitsdicht, zueinander ab. Der radial nach außen verdrängte Teil der Beschichtung kann einen um den Schraubenkopf umlaufenden Wulst 19 bilden.

Die Vertiefung 14 dient dazu, einen Grat, der beispielsweise durch das Einschrauben des Schafts 16 in den ersten Körper 20 gebildet wird und über die Oberseite des erste Körpers 20 ragt, aufzunehmen. Ferner dient die Vertiefung 14 dazu, einen Teil der Beschichtung 15 aufzunehmen. Durch die Vertiefung 14 wird somit erreicht, dass der etwaig vorhandene Grat die Dichtwirkung zwischen der Auflagefläche 12 und der Oberseite des ersten Körpers 20 nicht oder nicht wesentlich beeinträchtigt. Alternativ oder zusätzlich kann das in der Vertiefung 14 aufgenommene oder in die Vertiefung 14 verdrängte Material der Beschichtung 15 bereits dort eine dichtende Wirkung entfalten, insbesondere mit dem etwaig vorhandenen Grat oder mindestens einen Span. Dadurch wird die Dichtwirkung noch einmal verbessert.

Das Dichtmittel der Beschichtung 15 zeigt bevorzugt aufgrund seiner plastischen und elastischen Eigenschaften beim Verschrauben ein gewisses Fließverhalten, so dass das Dichtmittel zwischen der Auflagefläche 12 und der Oberseite des ersten Körpers 20 im Wesentlichen die Rauhtiefen auffüllt und somit zur Dichtungsfunktion beiträgt. Auch ein Verdrängen des Materials auf die unbelastete Seite und damit eine Auffüllung des kompletten Gewindespaltes kann zu einer Verbesserung der Dichtung führen. Zudem kann das Dichtmittel bevorzugt am Rand der Oberflächen einen zusätzlichen Wulst ausbilden (nicht im Bild), der eine zusätzliche Dichtungsfunktion erfüllen kann.

Die optional auf dem Schaft 16 angeordnete Beschichtung 15 bzw. 18 kann den Bereich zwischen dem Innendurchmesser des Innengewindes des ersten Körpers 20 und/oder des zweiten Körpers 30 und dem Außendurchmesser des Schraubenschafts 16, insbesondere des zylindrischen Teils, abdichten. Etwaig beim Einschrauben der Schraube 10 in den ersten und zweiten Körper 20, 30 vom Schraubenschaft 16 verdrängtes Material der Beschichtung kann insbesondere in die Vertiefung 14 verdrängt und/oder in der Vertiefung 14 aufgenommen werden.

Alternativ zu dem durch Einschrauben der Schraube in den ersten Körper 20 erzeugten Durchgangsloch für den Schraubenschaft 16 kann der erste Körper 20 ein Durchgangsloch aufweisen, dessen Durchmesser größer als der Außendurchmesser des Gewindes 16 im Bereich des zylindrischen Schaftteil ist.

## Beispiel 1

Es wurden Vergleichsschrauben gemäß Fig. 1 angefertigt, die mit unterschiedlichen Dichtmitteln der Schichtdicke 0,5 mm an der Unterseite der Auflagefläche (12) außerhalb der Vertiefung (14) beschichtet wurden, wobei das Dichtmittel die Vertiefung und den Schaftansatz bis einschließlich zweier Gewindegänge mitbedeckte.

Als Dichtmittel getestet wurde als wässrige Dispersion aufgetragene Dichtmittelzusammensetzungen enthaltend elastisches Acrylat oder Polyamid oder nichtelastisches Acrylat oder Polyurethan. Alternativ getestet wurde ein EPDM-Dichtring. Die beste Dichtigkeit und Festigkeit der Verschraubung wurden mit dem elastischen Dichtmittel enthaltend elastisches Acrylat erzielt.

Diese erfindungsgemäß mit elastischem Acrylat beschichtete Schraube erwies sich auch als überlegen gegenüber einer ansonsten identischen Schraube, die mit einem EPDM-Dichtring versehen war. Die erfindungsgemäß beschichtete Schraube konnte auch unter Anzugsdrehmomenten, die die EPDM-Scheibe überpressen und somit deren Dichtigkeitswirkung zerstören, gute Dichtigkeitswerte erzielen und überstand auch Relativbewegungen besser als EPDM.

Beispiel 2

Ferner wurden die folgenden Vergleichsversuche zwischen einem erfindungsgemäß verwendeten superzähen und elastischen Dichtmittel auf Acrylatbasis und nicht elastischen, anaerob aushärtbaren, d.h. reaktiven Acrylat-Klebstoffen durchgeführt.

Zur Demonstration des Unterschieds im Bruchverhaltens des erfindungsgemäß eingesetzten Dichtmittels und anaerob härtbaren Acrylatklebstoffen am Beispiel zweier mit anaerob aushärtbarem Acrylatklebstoff verklebten Klebeflächen wurden je zwei Metallstreifen mit Loctite 577 bzw. Weicon AN 306-01 bestrichen und verklebt. Ein elastisches und superzähes Dichtmittel auf Acrylatbasis wurde als erfindungsgemäßes Beispiel ebenfalls zwischen zwei Metallstreifen angebracht.

Die Metallstreifenlaminate wurden in Schraubzwingen eingespannt und auf Bruchverhalten/Zähigkeit getestet. Dabei zeigte sich, dass das erfindungsgemäß eingesetzte Dichtmittel ein elastisches Verhalten in Kombination mit notwendiger Ad- und Kohäsion und insbesondere auch Superzähigkeit zeigt, während anaerob ausgehärtete Acrylatklebstoffe hart sind und plötzlich versagen.

Beispiel 3

In einem weiteren Vergleichsversuch wurde die Adhäsion/Kohäsion zwischen Schraube und plattenförmigem Körper untersucht. Es zeigt sich, dass im erfindungsgemäß beschichteten Schraubenunterkopf bei Verpressung das elastische und superzähe Dichtmittel in alle Spalten und Rauhigkeiten "fließt" und teilweise aus dem Spalt herausgedrückt wird und dort griffest und sofort trocken ist, wohingegen der anaerob aushärtende Klebstoff lediglich in dünner Schicht aufgetragen werden kann und nur dort aushärtet, wo Sauerstoffausschluss herrscht. Alles, was aus dem Spalt herausgepresst wird, härtet nicht aus und bleibt klebrig-feucht.

Ebenso wurde das Losbrechmoment von Schrauben, die mit verschiedenen reaktiven "Loctite"®-Acrylatkleb-/Dichtstoffen beschichtet waren ("Loctite"®-561, 577 und 511), gemessen und mit dem derselben Schrauben, die erfindungsgemäß mit einem nicht-reaktiven elastischen Dichtstoff auf Acrylatbasis beschichtet waren, verglichen. Während die "Loctite"®-beschichteten Schrauben ein scharfes Losbrechmoment mit einem Drehmomentpeak bei etwa 10° zeigten und danach schnell abfielen (bei 20° wurden stets weniger als 50% des Losbrechmoments gemessen), zeigten die erfindungsgemäß beschichteten Schrauben ein deutliches Weiterdrehmoment, und auch bei 300° waren noch deutlich mehr als 50% des Losbrechmoments erhalten. Auch nach 24 Stunden behielt das Dichtmittel der erfindungsgemäß beschichteten Schrauben seine Zähigkeit.

Beispiel 4

Anaerob aushärtende (d.h. reaktive, nicht elastische) Klebstoffe sind nicht vorbeschichtbar, wie der folgende Vergleichsversuch zeigt.

Eine Schraube wurde mit superzähem elastischem Dichtmittel auf Acrylatbasis beschichtet, während zwei weitere Schrauben mit anaerob aushärtendem nicht elastischem Acrylat-Dichtmittel/Klebstoff beschichtet wurden.

Ein Papierabstrich zeigt, daß lediglich erfindungsgemäß eine griffest-trockene Beschichtung erzielt wird, die vorbeschichtet werden kann. Werden die entsprechend beschichteten Schrauben unmittelbar nach Beschichten verschraubt, so zeigt sich zudem, dass die erfindungsgemäßen Schrauben von der ersten Sekunde nach dem Verschrauben griffest sind. Das unter dem Schraubenkopf hervorgepresste griffest-trockene Dichtmittel weist weiterhin elastische und superzähe Eigenschaften auf und weist auch nach mechanischer Prüfung seine superzähen und elastischen Eigenschaften auf. Im Gegensatz hierzu verschmiert das flüssig austretende anaerob aushärtende Acrylatdichtmittel auch noch 24 Stunden nach Verschraubung.

**Bezugszeichenliste**

| | |
|---|---|
| 10 | Schraube |
| 11 | Schraubenkopf |
| 12 | Auflagefläche |
| 13 | Flansch |
| 14 | Vertiefung, insbesondere Rille oder Ringnut |
| 15 | Beschichtung |
| 16 | Schraubenschaft |
| 17 | Außengewinde |
| 18 | Teil der Beschichtung 15 im Bereich des Schraubenschafts |
| 19 | Wulst |
| 20 | erster flacher oder plattenförmiger Körper, insbesondere Blech |
| 30 | zweiter flacher oder plattenförmiger Körper, insbesondere Blech |

**Patentansprüche**

1. Schraube (10), umfassend:
   einen Schraubenkopf (11) und einen von einer Unterseite des Schraubenkopfs (11) ragenden Schraubenschaft (16) mit einem selbstformenden oder selbstfurchenden Gewinde (17), wobei der Schraubenkopf (11) an der Unterseite eine Auflagefläche (12) und zwischen Auflagefläche (12) und Schaft (16) mindestens eine ringförmige, sich um den Schaft (16) erstreckende Vertiefung (14) aufweist, wobei an der Unterseite des Schraubenkopfs (11) eine Beschichtung (15) aus einem nicht reaktiven elastischen und super-zähen Dichtmittel angebracht ist.

2. Schraube (10) nach dem vorhergehenden Anspruch, **dadurch gekennzeichnet, dass** der Schaft (16) bezüglich der Auflagefläche (12) senkrecht oder im Wesentlichen senkrecht steht und/oder dass die Auflagefläche (12) kreisringflächenförmig ist und eine radiale Breite aufweist, die größer oder gleich der radialen Breite der Vertiefung ist.

3. Schraube (10) nach einem der vorhergehenden Ansprüche, **dadurch gekennzeichnet, dass** die Auflagefläche (12) einen Wert A beträgt, der mindestens 30% der um den in der Ebene der Auflagefläche (12) liegenden Querschnitt Q des Schafts (16) verminderten Gesamtfläche GF unter dem Schraubenkopf beträgt.

4. Schraube (10) nach einem der vorhergehenden Ansprüche, **dadurch gekennzeichnet, dass** der Schaft (16) einen Bohrabschnitt mit zumindest einer Schneide aufweist, zwischen dem und dem Schraubenkopf (11) das Gewinde (17) ausgebildet ist.

5. Schraube (10) nach einem der Ansprüche 1 bis 3, **dadurch gekennzeichnet, dass** der Schaft (16) einen sich zum freien, insbesondere als Spitze oder abgerundete Spitze ausgebildetem, Ende des Schafts (16) hin verjüngenden Abschnitt aufweist, zwischen dem und dem Schraubenkopf (11) das Gewinde zumindest teilweise gebildet ist, wobei der sich verjüngende Abschnitt ohne Gewinde (17) oder mit einem Teil des Gewindes (17) versehen ist.

6. Schraube (10) nach einem der vorhergehenden Ansprüche, **dadurch gekennzeichnet, dass** die Schichtdicke der Beschichtung (15) außerhalb des Bereichs der Vertiefung (14) zwischen 0,1 bis 0,9 mm beträgt.

7. Schraube (10) nach einem der vorhergehenden Ansprüche, **dadurch gekennzeichnet, daß** das Dichtmittel 40 bis 90 Gew.-% Harzkomponente bestehend aus einem polymeren Harz oder aus einem Gemisch zweier oder mehrerer polymerer Harze enthält, wobei das Harz oder die Harze bevorzugt elastische(s) Harz(e) umfassen oder aus elastischem Harz/elastischen Harzen bestehen.

8. Schraube (10) nach Anspruch 7, **dadurch gekennzeichnet, dass** die Harzkomponente des Dichtmittels ein oder mehrere Acrylatpolymere und/oder ein oder mehrere Acrylatcopolymere umfasst, insbesondere dass die Harzkomponente aus Acrylatpolymeren und Acrylatcopolymeren besteht.

9. Schraube (10) nach einem der vorhergehenden Ansprüche, **dadurch gekennzeichnet, dass** das Dichtmittel in einem Hochgeschwindigkeits-Zugversuch unter 200 mm/min nach ISO 18872 und EN ISO 527-1 eine Bruchdehnung von 150 bis 250 %, insbesondere 170 bis 230 % zeigt.

10. Schraube (10) nach Anspruch 7 oder 8, **dadurch gekennzeichnet, dass** das polymere Dichtmittel zusätzlich einen Bereich (18) am Schaft bedeckt, bevorzugt einschließlich mindestens eines, besonders bevorzugt mindestens zweier oder dreier Gewindegänge.

11. Schraubverbund, umfassend eine Schraube (10) nach einem der vorhergehenden Ansprüche, einen ersten, beispielsweise flachen oder plattenförmigen, Körper (20) und einen zweiten, beispielsweise flachen oder plattenförmigen, Körper (30), wobei zumindest der zweite Körper (30) ein durch Einschrauben der Schraube (10) erzeugtes Innengewinde aufweist, wobei der erste Körper (20) zwischen dem Schraubenkopf (11) und dem zweiten Körper (30) eingefasst, insbesondere eingeklemmt ist, sich das Gewinde (16) der Schraube (10) im Eingriff mit dem Innengewinde des zweiten Körpers (30) und sich das Dichtmittel der Beschichtung (15) zwischen der Auflagefläche (12) und dem ersten Körper (20) befindet.

12. Schraubverbund nach dem vorhergehenden Anspruch, **dadurch gekennzeichnet, dass** der erste Körper (20) ein durch Einschrauben der Schraube (10) erzeugtes Innengewinde aufweist, wobei sich das Gewinde (17) der Schraube (10) im Eingriff mit dem Innengewinde des ersten Körpers (20) befindet.

13. Schraubverbund nach Anspruch 11, **dadurch gekennzeichnet, dass** der erste Körper (20) ein Durchgangsloch aufweist, dessen Durchmesser größer als der Außendurchmesser des Gewindes (17) ist und durch das sich der Schaft (16) erstreckt.

14. Schraubverbund nach einem der Ansprüche 11 bis 13, **gekennzeichnet durch** einen um den Schraubenkopf (11) umlaufenden Wulst (19), der insbesondere durch einen Teil der Beschichtung (15) gebildet ist.

## Claims

1. A screw (10) comprising:
a screw head (11) and a screw shaft (16) which protrudes from an underside of the screw head (11) and has a self-forming or self-tapping thread (17), wherein the underside of the screw head (11) has a bearing area (12) and at least one annular recess (14) extending around the shaft (16) between the bearing area (12) and the shaft (16), wherein a coating (15) made of a non-reactive, elastic and super-tough sealant is attached to the underside of the screw head (11).

2. The screw (10) according to the preceding claim, **characterised in that** the shaft (16) is perpendicular or substantially perpendicular with respect to the bearing area (12) and/or **in that** the bearing area (12) is shaped as a flat circular ring and has a radial width which is greater than or equal to the radial width of the recess (14).

3. The screw (10) according to any one of the preceding claims, **characterised in that** the bearing area (12) has a value A which is at least 30 % of the total area TA under the screw head (11) less the cross-section C of the shaft (16) which lies in the plane of the bearing area (12).

4. The screw (10) according to any one of the preceding claims, **characterised in that** the shaft (16) has a drilling portion featuring at least one cutting edge, wherein the thread (17) is formed between the drilling portion and the screw head (11).

5. The screw (10) according to any one of claims 1 to 3, **characterised in that** the shaft (16) has a portion which tapers towards the free end of the shaft (16), which is in particular formed as a tip or rounded tip, wherein the thread (17) is at least partially formed between said portion and the screw head (11), wherein the tapering portion is provided with no thread (17) or with some of the thread (17).

6. The screw (10) according to any one of the preceding claims, **characterised in that** the layer thickness of the coating (15) outside the region of the recess (14) is between 0.1 mm and 0.9 mm.

7. The screw (10) according to any one of the preceding claims, **characterised in that** the sealant contains 40 to 90 % by weight of a resin component made of a polymeric resin or a mixture of two or more polymeric resins, wherein the resin or resins preferably comprise or consist of elastic resin or resins.

8. The screw (10) according to claim 7, **characterised in that** the resin component of the sealant comprises one or more acrylate polymers and/or one or more acrylate copolymers and in particular consists of acrylate polymers and acrylate copolymers.

9. The screw (10) according to any one of the preceding claims, **characterised in that** the sealant shows an elongation at break of 150 to 250 %, in particular 170 to 230 %, in a high-speed tensile test below 200 mm/min according to ISO 18872 and EN ISO 527-1.

10. The screw (10) according to claim 7 or 8, **characterised in that** the polymeric sealant also covers a region (18) on the shaft (16), preferably including at least one and particularly preferably at least two or three flights of the thread.

11. A screw assemblage, comprising a screw (10) according to any one of the preceding claims, a first body (20) which is for example flat or planar, and a second body (30) which is for example flat or planar, wherein at least the second body (30) has an internal thread produced by screwing-in the screw (10), wherein the first body (20) is enclosed, in particular clamped, between the screw head (11) and the second body (30), the thread (17) of the screw (10) is in engagement with the internal thread of the second body (30), and the sealant of the coating (15) is situated between the bearing area (12) and the first body (20).

12. The screw assemblage according to the preceding claim, **characterised in that** the first body (20) has an internal thread produced by screwing-in the screw (10), wherein the thread (17) of the screw (10) is in engagement with the internal thread of the first body (20).

13. The screw assemblage according to claim 11, **characterised in that** the first body (20) has a transit hole, the diameter of which is greater than the external diameter of the thread (17) and through which the shaft (16) extends.

14. The screw assemblage according to any one of claims 11 to 13, **characterised by** a bead (19) which encircles the screw head (11) and is in particular formed by some of the coating (15).

## Revendications

1. Vis (10), comprenant :
une tête (11) et une tige (16) faisant saillie depuis une face inférieure de la tête (11) et comportant un filetage autoperceur ou autotaraudeur (17), la tête (11) présentant une surface d'appui (12) sur sa face inférieure et, entre ladite surface d'appui (12) et la tige (16), au moins un renfoncement annulaire (14) s'étendant autour de la tige (16), un revêtement (15) constitué d'un matériau étanchéifiant non réactif, élastique et super-résistant étant appliqué sur la face inférieure de la tête (11).

2. Vis (10) selon la revendication précédente, **caractérisée en ce que** la tige (16) est perpendiculaire ou sensiblement perpendiculaire à la surface d'appui (12) et/ou **en ce que** la surface d'appui (12) a la forme d'une couronne circulaire et présente une largeur radiale supérieure ou égale à la largeur radiale du renfoncement.

3. Vis (10) selon l'une des revendications précédentes, **caractérisée en ce que** la surface d'appui (12) a une valeur A faisant au moins 30 % de la surface totale GF sous-jacente à la tête de vis diminuée de la section transversale Q de la tige (16) se trouvant dans le plan de la surface d'appui (12).

4. Vis (10) selon l'une des revendications précédentes, **caractérisée en ce que** la tige (16) présente une section de perçage dotée d'au moins une arête coupante, entre laquelle et la tête (11) est formé ledit filetage (17).

5. Vis (10) selon l'une des revendications 1 à 3, **caractérisée en ce que** la tige (16) présente une section qui va en s'effilant vers l'extrémité libre de la tige (16) notamment conçue en pointe ou arrondie, entre laquelle et la tête (11) est formé au moins partiellement ledit filetage, la section effilée étant prévue sans filetage (17) ou avec une partie du filetage (17).

6. Vis (10) selon l'une des revendications précédentes, **caractérisée en ce que** l'épaisseur de la couche du revêtement (15) en dehors de la zone du renfoncement (14) est comprise entre 0,1 et 0,9 mm.

7. Vis (10) selon l'une des revendications précédentes, **caractérisée en ce que** le matériau étanchéifiant contient 40 à 90 % en poids de composant résine constitué d'une résine polymère ou d'un mélange d'au moins deux résines polymères, la ou lesdites résines comprenant de préférence une ou des résines élastiques ou se composant d'une ou plusieurs résines élastiques.

8. Vis (10) selon la revendication 7, **caractérisée en ce que** le composant résine du matériau étanchéifiant comprend un ou plusieurs polymères à base d'acrylate et/ou un ou plusieurs copolymères à base d'acrylate, notamment **en ce que** le composant résine se compose de polymères à base d'acrylate et de copolymères à base d'acrylate.

9. Vis (10) selon l'une des revendications précédentes, **caractérisée en ce que** le matériau étanchéifiant présente un allongement à la rupture de 150 à 250 %, notamment de 170 à 230 %, conformément à un essai de traction à grande vitesse de 200 mm/min selon les normes ISO 18872 et EN ISO 527-1.

10. Vis (10) selon la revendication 7 ou 8, **caractérisée en ce que** le matériau étanchéifiant polymère recouvre en outre une zone (18) de la tige comprenant de préférence au moins un filetage, et tout préférablement au moins deux ou trois filetages.

11. Assemblage vissé, comprenant une vis (10) selon l'une des revendications précédentes, un premier corps (20) par exemple plat ou en forme de plaque, et un deuxième corps (30) par exemple plat ou en forme de plaque ; ledit deuxième corps (30), au moins, présentant un taraudage réalisé par vissage de la vis (10), ledit premier corps (20) étant pris, notamment enserré, entre la tête (11) et le deuxième corps (30), ledit filetage (16) de la vis (10) étant en prise avec le taraudage du deuxième corps (30) et le matériau d'étanchéité du revêtement (15) se trouvant entre la surface d'appui (12) et ledit premier corps (20).

12. Assemblage vissé selon la revendication précédente, **caractérisé en ce que** le premier corps (20) présente un taraudage créé par vissage de la vis (10), ledit filetage (17) de la vis (10) étant en prise avec le taraudage du premier corps (20).

13. Assemblage vissé selon la revendication 11, **caractérisé en ce que** le premier corps (20) présente un trou traversant dont le diamètre est supérieur au diamètre extérieur du filetage (17) et à travers lequel s'étend la tige (16).

14. Assemblage vissé selon l'une des revendications 11 à 13, **caractérisé par** un bourrelet (19) longeant le pourtour de la tête (11) et qui est formé notamment par une partie du revêtement (15).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012210791 A1